Europäisches Patentamt

European Patent Office

Office européen des brevets

(19)

(11) Numéro de publication : **0 114 539**
**B1**

(12) # FASCICULE DE BREVET EUROPÉEN

(45) Date de publication du fascicule du brevet :
07.05.86

(51) Int. Cl.⁴ : **H 02 B   1/20**

(21) Numéro de dépôt : 83402350.9

(22) Date de dépôt : 06.12.83

(54) Dispositif de connexion à barre omnibus.

(30) Priorité : 07.12.82 FR 8220447

(43) Date de publication de la demande :
01.08.84 Bulletin 84/31

(45) Mention de la délivrance du brevet :
07.05.86 Bulletin 86/19

(84) Etats contractants désignés :
BE CH DE GB IT LI NL SE

(56) Documents cités :
FR-A- 2 190 318
FR-A- 2 407 588

(73) Titulaire : **LA TELEMECANIQUE ELECTRIQUE**
**33 bis, avenue du Maréchal Joffre**
**F-92000 Nanterre (FR)**

(72) Inventeur : **Lebeau, Jean-Claude**
**53, rue du 26ème Dragons**
**F-21000 Dijon (FR)**
Inventeur : **Guenin, Serge**
**18, rue Hoche**
**F-21000 Dijon (FR)**

(74) Mandataire : **Marquer, Francis**
**CABINET MOUTARD 35, avenue Victor Hugo Rési-**
**dence Champfleury**
**F-78180 Voisins-le-Bretonneux (FR)**

Jouve, 18, rue St-Denis, 75001 Paris, France

# Description

La présente invention concerne un dispositif de connexion à barre omnibus, permettant l'alimentation en parallèle de plusieurs appareillages électriques.

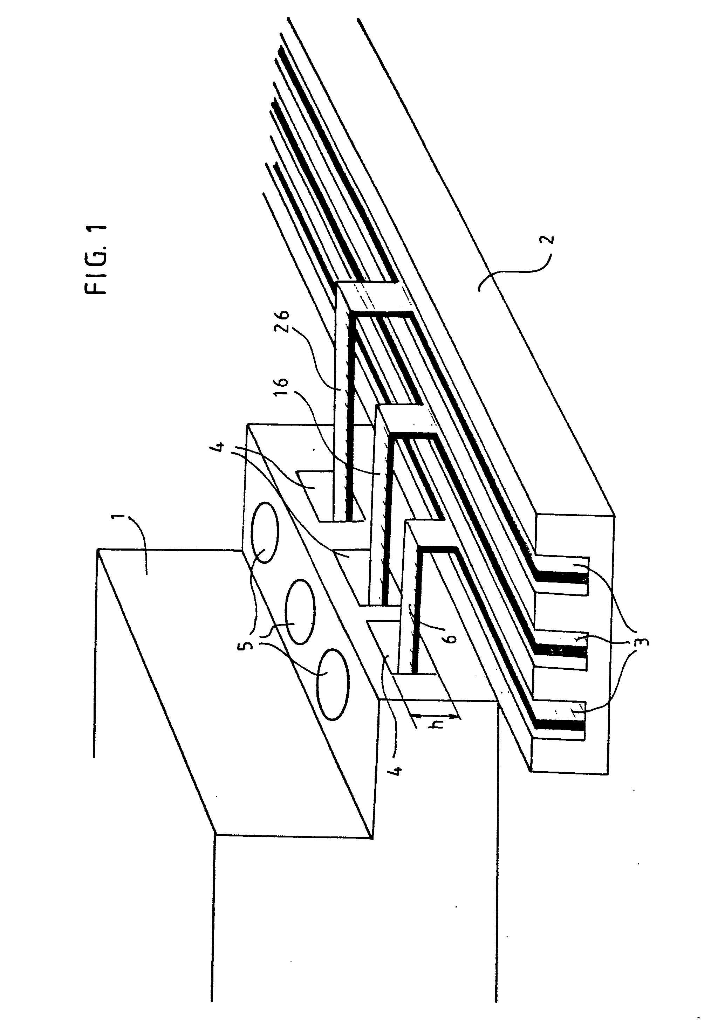

De tels dispositifs sont connus et comportent comme le montre la figure 1, des barres omnibus 3 juxtaposées de chant et des fiches de prolongement 6, 16, 26 en forme de barre, prolongeant les barres omnibus aux points de connexion 4 d'un appareillage domestique 1. L'ensemble des barres 3 est monté dans un corps isolant 2.

Utilisé avec un appareillage dont les bornes de connexion sont disposées dans des logements 5 qui ne sont pas directement accessibles à l'utilisateur, ce dispositif présente l'inconvénient de laisser subsister des parties conductrices 6, 16, 26 directement accessibles.

En outre, le dispositif de l'art antérieur nécessite d'avoir des fiches de prolongement 6, 16, 26 de longueurs différentes pour pouvoir rattraper les différences de distance entre les barres des différentes phases et les bornes de connexion correspondantes de l'appareillage. Comme on peut le voir sur la figure 1, la portion 26 est plus longue que la portion 16 elle-même plus longue que la portion 6. Il est donc nécessaire d'associer à chaque phase un type de barre particulier et, par conséquent, d'effectuer trois découpes et pliages différents.

La présente invention a pour but d'éviter les inconvénients de l'art antérieur.

Un premier but de l'invention est d'éviter d'avoir des parties conductrices directement accessibles. Un deuxième but est la réalisation d'un dispositif à barre omnibus dont les barres soient identiques quelle que soit la phase, pour ne pas avoir à différencier la fabrication. Un troisième but est la réalisation d'un dispositif respectant des conditions d'espacement électrique suffisantes.

Selon l'invention, un dispositif de connexion à barre omnibus permettant l'alimentation de plusieurs appareillages multipolaires est caractérisé en ce qu'il comprend : un profilé en matériau isolant comportant une pluralité de rainures juxtaposées en nombre égal au nombre de pôles des appareils et disposées de façon que la première forme un angle aigu avec la seconde, que la seconde fasse le même angle aigu avec la troisième et ainsi de suite ; une pluralité de barres de connexion, logées chacune dans une rainure et découpées en forme de peigne comportant un nombre de dents correspondant au nombre d'appareils, espacées les unes des autres d'une longueur au moins égale au module des appareils et dont les extrémités sont conformées de façon à s'adapter aux bornes de connexion des appareils.

D'autres caractéristiques et avantages apparaîtront plus clairement à la lecture de la description ci-après, faite en se référant au dessin annexé, dans lequel :

La figure 1 représente une vue d'ensemble d'un dispositif de connexion de l'art antérieur ;

La figure 2 représente une vue de dessus d'un dispositif de connexion selon l'invention, non associé aux appareillages ;

La figure 3 est une vue en coupe d'un profilé faisant partie du dispositif ;

La figure 4 est une vue de côté du dispositif ; et

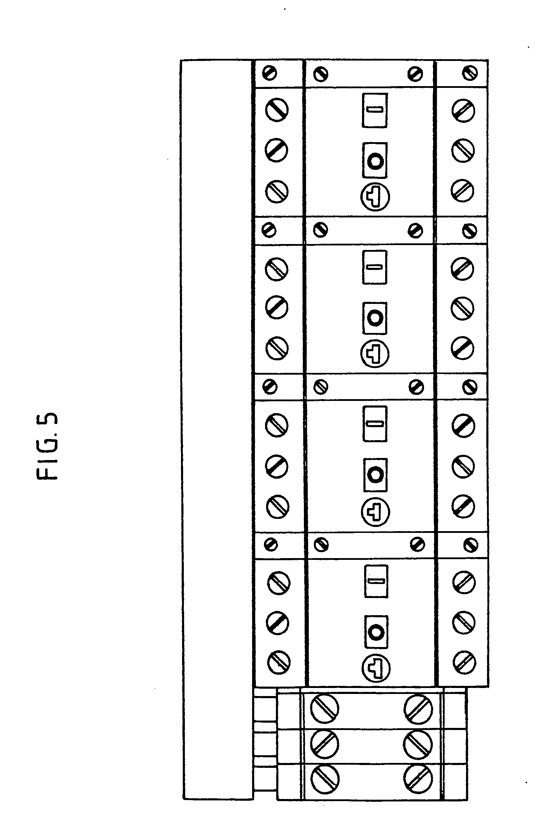

La figure 5 est une vue de dessus du dispositif, associé à plusieurs appareillages.

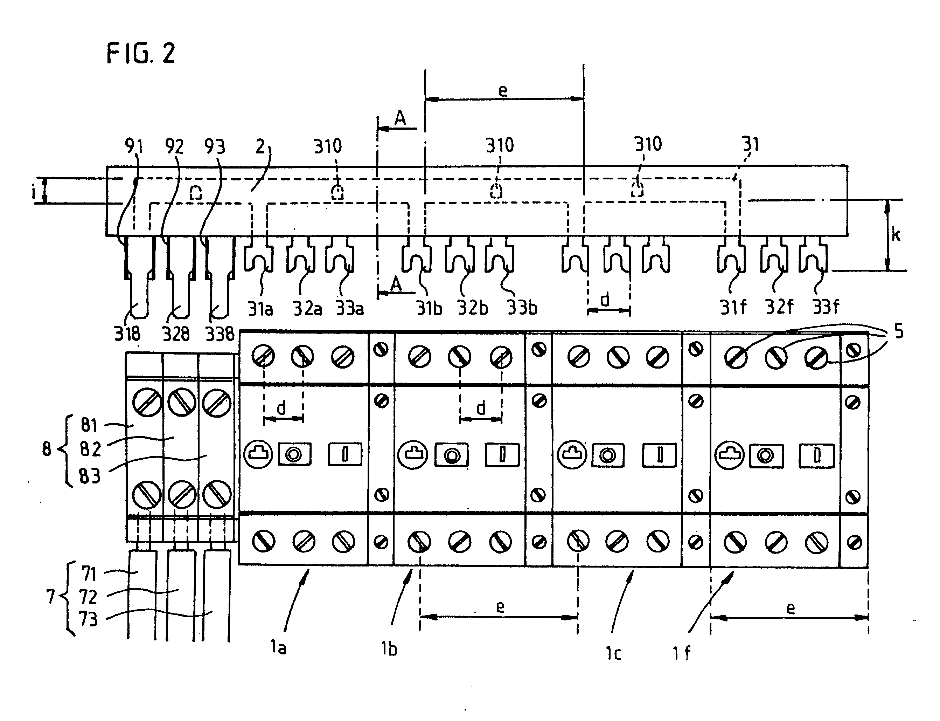

La figure 2 est une vue d'ensemble d'un dispositif de connexion à barre omnibus permettant l'alimentation en parallèle de plusieurs appareillages $1_a$, $1_b$, $1_c$, $1_f$. Un ensemble 7 de câbles d'alimentation 71, 72, 73 correspondant aux différentes phases, sont branchés à un ensemble (8) de borniers de connexion 81, 82, 83 dont les sorties respectives accueillent des prolongements ou dents 318, 328, 338 de barres omnibus 31, 32, 33 en forme de peigne.

A la barre 31 sont associés les prolongements ou dents $31_a$, $31_b$, $31_c$, $31_f$, représentés en pointillés, qui permettent d'alimenter respectivement la première phase des appareillages $1_a$, $1_b$, $1_c$, $1_f$ ; il en est de même pour les barres 32, 33 qui alimentent les deuxième et troisième phases. La forme des extrémités de prolongements 318, $31_a$, $31_b$, $31_c$, $31_f$ est, bien évidemment, fonction du type de connexion utilisé sur le bornier 8 et les appareillages 1 ; elle pourra être modifiée suivant les besoins. Les dents $31_a$, $31_b$, $31_c$, $31_f$ ont une longueur k suffisante pour venir se placer sur les connecteurs, sans aller en butée contre le fond du logement 4 de la connexion, lorsque les barres sont logées dans le profilé et que l'on amène celui-ci en contact avec les appareils les plus proéminents.

L'ensemble des barres 31, 32, 33, de découpe identique, est monté dans un profilé extrudé 2 en matériau isolant ; ces barres sont décalées de façon à tomber en face des connecteurs respectifs des appareillages. Si l'on appelle (d) la distance entre une borne et la borne suivante du même appareil correspondant à des phases différentes, la barre 31 est décalée de la suivante 32 d'une distance d, et la barre 32 est elle-même décalée, dans la même direction, d'une distance d par rapport à la suivante 33. D'autre part, si l'on utilise des appareils modulaires de module e, la distance entre la première borne de l'un des appareils et la première borne du suivant sera au moins (e) s'ils sont accolés, et les portions de prolongement (318, $31_a$, $31_b$, $31_c$, $31_f$) seront au moins espacées d'une distance e.

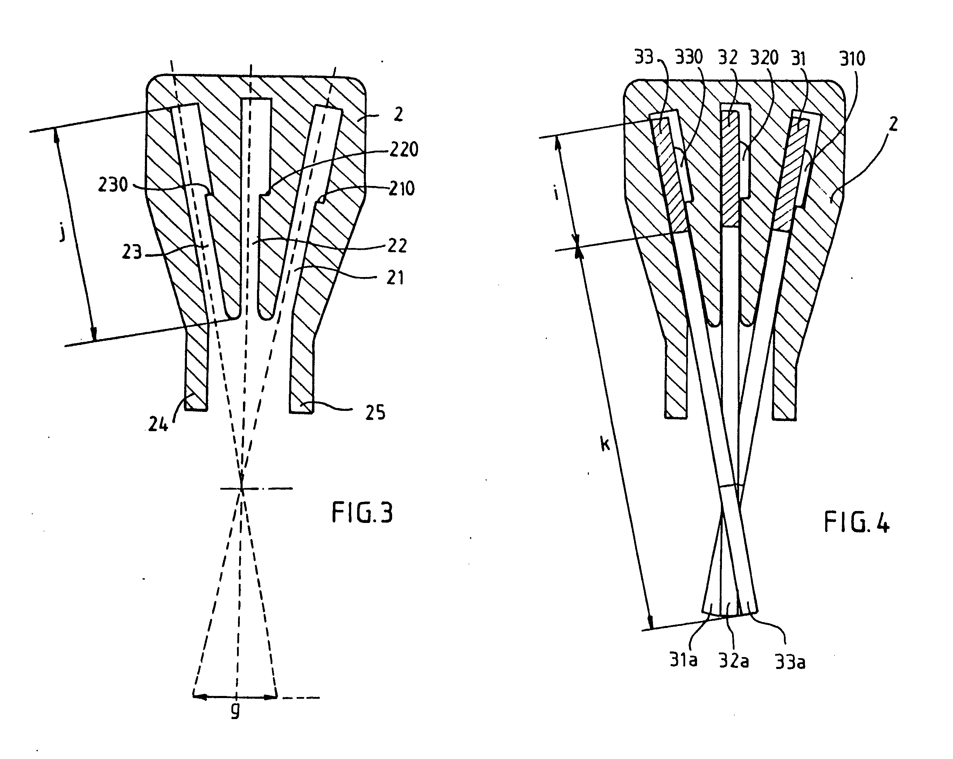

La figure 3 représente le profilé extrudé 2, vue en coupe. Il est en forme de coin et comporte autant de rainures qu'il y a de phases, en l'occurrence trois, respectivement 21, 22, 23. Les différentes rainures sont disposées de façon à former un angle aigu entre elles ; ainsi la rainure 21 fait un angle α avec la rainure 22, qui fait elle-même un angle α avec la rainure 23. On choisit l'angle de façon à ce que les barres, une fois placées dans les rainures, ne soient pas trop inclinées, pour éviter que leurs prolongements $31_a$, $32_a$, $33_a$, correspondant aux différents pôles d'un appareil, ne s'écartent pas trop par rapport à l'axe de symétrie du profilé. Cet angle sera choisi entre 0 et 30°. Ce choix permet d'éviter que l'écartement g des prolongements soit supérieur à la hauteur h (figure 1) des ouvertures 4 d'accès aux bornes de connexion de l'appareillage.

On a trouvé qu'une valeur de 20° convenait parfaitement pour un jeu de barres bipolaires.

Chaque rainure 21, 22, 23 comporte un épaulement 210, 220, 230, dont la fonction sera expliquée dans la suite. Le coin 2 est prolongé par des lèvres 24, 25 qui empêchent tout contact avec les barres lorsque le dispositif est branché aux appareils, comme le représente la figure 3.

La figure 4 représente le profilé 2 associé aux barres de connexion 31, 32, 33 ; ces barres sont découpées dans du cuivre ou tout autre matériau bon conducteur de l'électricité ; elles comportent, sur certaines portions de leurs longueurs, des bossages 310, 320, 330 (figures 2 et 4), qui viennent s'appuyer sur les épaulements 210, 220, 230 du profilé, de façon à éviter de sortir les barres de leurs logements par simple traction sur le profilé. D'autre part, la profondeur i de la barre est inférieure à la profondeur j des rainures 21, 22, 23 formées dans le profilé. Cette disposition a pour but d'augmenter les distances d'isolement entre les barres.

En fonctionnement, lorsque l'on monte le dispositif sur un ensemble d'appareils, les lèvres 24, 25 viennent en butée contre les boîtiers des appareils, une fois que l'on a introduit les plages de contact $31_{a, b, c, d, f}$, $32_{a, b, c, d, f}$ etc., dans les ouvertures 4 respectives des borniers de connexion des appareils. Par serrage des connecteurs, les différences d'écarts entre les plages de contact $31_a$, $32_a$, $33_a$ des différentes barres sont rattrapées par une légère déformation des barres.

Sur la figure 2, on peut se rendre compte que, lorsque les dimensions des appareils ne sont pas identiques, le profilé ne peut pas venir en contact avec tous les appareils. Dans ce cas, on prévoit, sur les prolongements 318, 328, 338 qui ne seront pas totalement protégés, des gaines isolantes 91, 92, 93 en matériau thermo-rétractable.

**Revendications**

1. Dispositif de connexion à barre omnibus permettant l'alimentation de plusieurs appareillages multipolaires, caractérisé en ce qu'il comprend un profilé (2) en matériau isolant comportant une pluralité de rainures juxtaposées (21, 22, 23), en nombre égal au nombre de pôles des appareils et disposées de façon que la première forme un angle aigu ($\alpha$) avec la seconde, que la seconde fasse le même angle aigu ($\alpha$) avec la troisième et ainsi de suite ; une pluralité de barres de connexion, (31, 32, 33), logées chacune dans une rainure (respectivement 21, 22, 23) et découpées en forme de peigne comportant un nombre de dents (318, $31_a$, $31_b$, $31_c$, $31_f$) correspondant au nombre d'appareils, espacées les unes des autres d'une longueur au moins égale au module des appareils, et dont les extrémités sont conformées de façon à s'adapter aux bornes de connexion des appareils.

2. Dispositif selon la revendication 1, caractérisé en ce que les rainures (21, 22, 23) du profilé ont une profondeur (j) supérieure à la profondeur des barres, mais en tout cas inférieure à la longueur (k) des dents.

3. Dispositif selon la revendication 1 ou 2, caractérisé en ce que ledit angle ($\alpha$) est compris entre 0 et 30°.

4. Dispositif selon l'une des revendications précédentes, caractérisé en ce que chaque barre comporte sur sa longueur au moins deux bossages (310) qui coopèrent avec l'épaulement (210, 220, 230) de la rainure dans laquelle la barre est logée.

5. Dispositif selon l'une des revendications précédentes, caractérisé en ce que le profilé (2) comporte deux lèvres extérieures (24, 25) qui viennent en butée contre les boîtiers des appareils.

6. Dispositif selon l'une des revendications précédentes, caractérisé en ce que lorsque les barres comportent des dents (318, 328, 338) de longueurs inégales, lesdites dents sont revêtues d'une gaine (91, 92, 93) isolante.

**Claims**

1. A connecting device with a busbar adapted for feeding several multipolar apparatuses, characterized in that it comprises a shaped part (2) made of insulating material and comprising a multiplicity of grooves (21, 22, 23), placed side by side, whose number equals the number of poles of the apparatuses and arranged in such a manner that the first one forms an acute angle ($\alpha$) with the second, that the second forms the same acute angle ($\alpha$) with the third and so on, a plurality of connection bars (31, 32, 33), each housed in a groove (21, 22, 23 respectively) and cut in the form of a comb having a number of teeth (318, $31_a$, $31_b$, $31_c$, $31_f$) corresponding to the number of apparatuses, spaced apart from each other by a length at least equal to that of the module of the apparatuses and whose ends are formed so as to be adapted to the connection terminals of the apparatuses.

2. A device according to claim 1, wherein the grooves (21, 22, 23) of the shaped part have a depth (j) greater than that of the bars, but, however, less that the length (k) of the teeth.

3. A device according to claim 1 or 2, wherein said angle ($\alpha$) is comprised between 0 and 30°.

4. A device according to one of the preceding claims, wherein each bar bears on its length at least two bosses (310) which cooperate with the shoulder (210, 220, 230) of the groove that houses the bar.

5. A device according to one of the preceding claims, wherein the shaped part (2) has two outer rims (24, 25) abutting against the cases of the apparatuses.

6. A device according to one of the preceding claims, characterized by the fact that, when the bars have teeth (318, 328, 338) of uneven length, said teeth are coated with an insulating sheath (91, 92, 93).

**Patentansprüche**

1. Verbindungsvorrichtung mit Sammelschiene, die es erlaubt, mehrere Vielpolgeräte zu versorgen, dadurch gekennzeichnet, dass sie ein Profil (2) aus Isoliermaterial besitzt, mit einer Vielzahl von nebeneinander angeordneten Rillen (21, 22, 23) der gleichen Zahl wie die Pole des Gerätes und so angeordnet, dass die erste einen spitzen Winkel ($\alpha$) mit der zweiten bildet, dass die zweite den gleichen spitzen Winkel ($\alpha$) mit der dritten bildet, usw ; eine Vielzahl von Verbindungsschienen (31, 32, 33), die jeweils in einer Rille (jeweils 21, 22, 23) angeordnet sind und in Form eines Kammes ausgestanzt sind, mit einer Anzahl von Zähnen (318, $31_a$, $31_b$, $31_c$, $31_f$), die der Anzahl von Geräten entspricht und die voneinander um eine Länge entfernt sind, die mindestens den Modulen der Geräte entspricht und deren Enden so ausgebildet sind, dass sie sich den Anschlussklemmen der Geräte anpassen.

2. Vorrichtung nach Anspruch 1, dadurch gekennzeichnet, dass die Rillen (21, 22, 23) des Profils eine Tiefe (j) besitzen, die grösser ist, als die Tiefe der Schienen, aber auf jeden Fall geringer als die Länge (k) der Zähne.

3. Vorrichtung nach Anspruch 1 oder 2, dadurch gekennzeichnet, dass besagter Winkel ($\alpha$) zwischen 0 und 30° enthalten ist.

4. Vorrichtung nach einem der vorhergehenden Ansprüche, dadurch gekennzeichnet, dass jede Schiene in ihrer Länge mindestens zwei Buckel (310) hat, die mit der Schulter (210, 220, 230) der Rille zusammen arbeiten, welche die Schiene aufnimmt.

5. Vorrichtung nach einem der vorhergehenden Ansprüche, dadurch gekennzeichnet, dass das Profil (2) zwei äussere Ränder (24, 25) besitzt, welche gegen die Gerätegehäuse in Anschlag gelangen.

6. Vorrichtung nach einem der vorhergehenden Ansprüche, dadurch gekennzeichnet, dass, wenn die Schienen Zähne (318, 328, 338) unterschiedlicher Länge besitzen, besagte Zähne mit einem Isoliermantel (91, 92, 93) überzogen sind.

FIG. 1

FIG. 2

FIG.4

FIG.3

0 114 539

FIG. 5